# EUROPÄISCHE PATENTSCHRIFT

(11) **EP 2 114 588 B1**
(45) Veröffentlichungstag und Bekanntmachung des Hinweises auf die Patenterteilung: **26.07.2017**
(21) Anmeldenummer: 07856673.4
(22) Anmeldetag: 13.12.2007
(51) Int. Cl.: G01K 1/14

(54) **POSITIONIERUNGSVORRICHTUNG FÜR EINE STABFÖRMIGE MESSEINRICHTUNG**
POSITIONING DEVICE FOR A ROD-SHAPED MEASURING APPARATUS
DISPOSITIF DE POSITIONNEMENT D'UN APPAREIL DE MESURE EN FORME DE BARRE

(30) Priorität: 02.02.2007 DE 102007006060; 11.04.2007 DE 102007017336; 10.08.2007 DE 102007037684
(43) Veröffentlichungstag der Anmeldung: 11.11.2009
(73) Patentinhaber: SMS group GmbH, 40237 Düsseldorf (DE)
(72) Erfinder: ARZBERGER, Matthias, 45470 Mülheim (DE); DEUSSEN, Josef, 52525 Heinsberg (DE); REIFFERSCHEID, Markus, 41352 Korschenbroich (DE)
(74) Vertreter: Klüppel, Walter
(86) Internationale Anmeldenummer: PCT/EP2007/010927
(87) Internationale Veröffentlichungsnummer: WO 2008/092497

(56) Entgegenhaltungen:
- DE-A1- 2 229 274
- JP-A- 61 232 048
- US-A- 3 681 990
- US-A- 5 158 128

## Beschreibung

Die Erfindung betrifft eine Positionierungseinrichtung für eine stabförmige Messeinrichtung, z. B. ein Thermoelement, zur Bestimmung einer Messgröße an einem Messpunkt eines Objektes, wie z.B. einer Stranggießkokille.

Aus der US 5,158,128 ist eine Positioniervorrichtung für eine Messvorrichtung bekannt. An dem einen objektfernen Ende des Führungselementes dient eine Schraube als zweiter Anschlag für die in dem Führungselement der Positioniervorrichtung angeordnete Feder, die das Messelement gegen das objektseitige Ende des Führungselementes andrückt.

Die DE 22 29 274 A1 beschreibt einen Temperaturfühler, angeordnet in einem Führungsgehäuse innerhalb der Wandung, zur Temperaturmessung innerhalb einer Stranggießkokille, wobei der Temperaturfühler mittels einer Feder in eine Messposition angestellt wird.

In der JP 61 232048 A ist ein Temperaturfühler beschrieben, der in einer Aufnahmebohrung innerhalb eines Gehäuses angeordnet ist. Der Andruck des Temperaturfühlers innerhalb der Fühlungsbohrung erfolgt ebenfalls mittels Federkraft, wobei die Feder mittels einer Schraube vorgespannt wird.

Die US 3,681,990 beschreibt einen Temperaturfühler, der in einem separaten Schraub-Verbindungsstück angeordnet ist und mit einer Feder innerhalb einer Führungsbohrung in die Messposition angestellt wird.

Eine derartige Positionierungsvorrichtung ist auch aus der US-amerikanischen Patentschrift US 3,745,828 bekannt. Die dort offenbarte Positionierungsvorrichtung ist in der äußeren Wand einer doppelwandigen Kokille montiert. Zwischen den beiden Kokillenwänden befindet sich eine Kühlflüssigkeit. Insofern ist die besagte äußere Wand der Kokille vergleichbar mit der Wand eines auf die Rückseite einer einwandigen Kokille aufgesetzten Wasserkastens. Gemäß der US-Schrift umfasst die Positionierungsvorrichtung ein zylinderförmiges Gehäuse/Führungselement, welches in der äußeren Wand fest verankert ist. Durch das zylinderförmige Gehäuse und die Kühlflüssigkeit hindurch ist eine Temperaturmesseinrichtung bis an eine Messstelle im Innern der ersten Wand der Kokille geführt. Das zylinderförmige Gehäuse/Führungselement dient nicht nur zur Führung des Thermoelementes, sondern auch zur Führung eines Federelementes, welches als Druckfeder ausgebildet und zwischen zwei Anschlägen eingespannt ist. Der eine Anschlag ist mit dem Thermoelement fest verbunden, während der andere Anschlag dem zylinderförmigen Gehäuse räumlich fest zugeordnet ist. Bei dieser Konstruktion stützt sich die Druckfeder an dem zweiten Anschlag bzw. dem zylinderförmigen Gehäuse ab und drückt das Thermoelement unter einer definierten Vorspannung gegen die Messstelle.

Die besagte Vorspannung bewirkt einen guten Kontakt des Thermoelementes auch unter ungünstigen Umgebungsbedingungen, wie z.B. bei kleineren Ungenauigkeiten in der Bohrlochtiefe an der Rückseite der ersten Kokillenwand oder wenn sich der grundsätzlich konstante Abstand zwischen innerer und äußerer Kokillenwand aufgrund thermischer Einflüsse vergrößern sollte. Der Federweg der Druckfeder beträgt in der Regel nur wenige Millimeter und ist deshalb nur geeignet, kleinere Ungenauigkeiten zu kompensieren.

In der Praxis sind die Bohrlöcher für die Messstellen in der Rückseite der Kokille in der Regel jedoch unterschiedlich tief; die Bohrlochtiefe kann z.B. zwischen 10 und 60 mm variieren. Die oben beschriebene bekannte Positionierungsvorrichtung ist aufgrund ihres nur relativ kurzen Federweges nicht geeignet, eine derartig große Variation der Bohrlochtiefe zu kompensieren. Dementsprechend muss ein Anbieter verschiedene Thermoelemente mit jeweils unterschiedlichen Längen für die unterschiedlichen Bohrlochtiefen vorrätig halten. Bei der Montage kann diese große Vielzahl an unterschiedlich langen Thermoelementen, die sich oftmals nur um wenige Millimeter in der Länge unterscheiden, zu Verwechslungen und zu Fehlmontagen führen, was dann oftmals Fehlmessungen zur Folge hat.

Der Erfindung liegt die Aufgabe zugrunde, eine bekannte Positionierungsvorrichtung für eine stabförmige Messeinrichtung dahingehend weiterzubilden, dass sie die Verwendung von stabförmigen Messeinrichtungen mit einheitlicher Länge auch für unterschiedlich tief in einem Objekt, wie z.B. einer Stranggießkokille gelegene Messpunkte ermöglicht.

Diese Aufgabe wird durch den Gegenstand des Patentanspruchs 1 gelöst. Dieser ist dadurch gekennzeichnet, dass eine Hülse vorgesehen ist, welche in axialer Verlängerung an das Objekt-ferne Ende des zylindrischen Führungselementes angeschlossen ist und in welcher das Federelement und die Messeinrichtung ebenfalls geführt sind und dass der zweite Anschlag für das Federelement in Verbindung mit der Hülse über das Objekt-ferne Ende des zylindrischen Führungselementes hinaus axial verschiebbar auf der Hülse geführt und fixierbar ist.

Die erfindungsgemäß vorgesehene Hülse ermöglicht vorteilhafterweise eine Verlagerung des zweiten Anschlags für das Federelement in axialer Richtung des zylindrischen Führungselementes nach Maßgabe der jeweiligen Tiefe eines

Bohrloches, in welches jeweils eine stabförmige Messeinrichtung eingeführt werden soll. Aufgrund der Möglichkeit zur axialen Verschiebung des zweiten Anschlages für das Federelement können jetzt für jedes Bohrloch in der Kokillenrückwand gleich lange Messeinrichtungen verwendet werden, unabhängig von der jeweiligen Tiefe des Bohrloches. Damit ist die Gefahr von Verwechslungen bei der Zuordnung von einzelnen unterschiedlich langen Messeinrichtungen zu bestimmten Bohrlöchern nicht mehr gegeben. Außerdem wird durch die Verschiebbarkeit des zweiten Anschlags sichergestellt, dass trotz der Verwendung nur von Messeinrichtungen mit vorzugsweise einheitlicher Länge in jedem Einzelfall auch immer die richtige Vorspannung in Abhängigkeit der jeweils individuellen Bohrlochtiefe eingestellt werden kann. Damit ist gleichzeitig in jedem Fall auch der erforderliche Kontakt zwischen der Spitze der Messeinrichtung und dem Messpunkt innerhalb der Kokille sichergestellt. Alternativ zur Verwendung von Messeinrichtungen mit nur einer einheitlichen Länge, können selbstverständlich auch Messeinrichtungen mit unterschiedlichen Standardlängen verwendet werden.

Beispielhaft ist die Hülse über ein erstes Gewinde an dem zylindrischen Führungselement angeschlossen. Mit Hilfe des ersten Gewindes ist die Länge, mit der die Hülse über das Objekt-ferne Ende des zylindrischen Führungselementes hinausragt variabel einstellbar. Insofern ermöglicht das erste Gewinde auch eine Variation bzw. Einstellung der Weglänge, über die der zweite Anschlag über das Objekt-Ferne Ende des zylindrischen Führungselementes hinaus axial verschiebbar und fixierbar ist. Alternativ könnte die Hülse auch über einen Bajonettanschluss an dem zylindrischen Führungselement angeschlossen sein. Der Bajonettanschluss hätte den Vorteil, dass er kein schmutzanfälliges Gewinde aufweist, welches der korrosiven Umgebung beim Betrieb der Kokille ausgesetzt wäre und dass er eine Montage und Demontage des Führungselementes und des Thermoelementes auch per Hand ohne Werkzeug ermöglicht. Der Bajonettanschluss kann auch als Mehr-Finger/Nut Einheit ausgeführt sein. Als weitere Alternative könnte die Hülse auch fest z. B. durch Anschweißen, mit dem Führungselement verbunden sein oder einstückig mit diesem ausgebildet sein.

Der zweite Anschlag ist bei der vorliegenden Erfindung in Form einer scheibenförmigen Lochblende mit einer zentralen Öffnung ausgebildet. Die Öffnung dient zur Durchführung der stabförmigen Messeinrichtung bzw. zur Durchführung von deren Kabeln. Außerhalb der Öffnung dient die Lochblende als Anschlag für das Federelement.

Gemäß einem ersten Ausführungsbeispiel sind an der Lochblende zwei gegenüberliegende Nasen angeformt, welche in einem Schlitz der Hülse geführt sind. Mit Hilfe einer Mutter, die mit einem zweiten Gewinde der geschlitzten Hülse in Eingriff steht und über die Nasen auf die Lochblende einwirkt, kann die Lochblende axial positioniert werden.

Gemäß einem zweiten alternativen Ausführungsbeispiel ist die Lochblende selber als Überwurf, vorzugsweise als Überwurfmutter ausgebildet, welche auf dem Objekt-ferne Ende der Hülse befestigbar ist. Die Länge des Gewindes der Überwurfmutter bietet eine weitere Möglichkeit zur variablen Einstellung der Weglänge, innerhalb derer der zweite Anschlag über das Objekt-Ferne Ende des zylindrischen Führungselementes hinaus axial verschiebbar und fixierbar ist. Alternativ könnte der Überwurf auch mit einem Bajonettanschluss an der Hülse befestigt werden, wobei dann für den Bajonettanschluss die oben bereits erwähnten Vorteile gleichermaßen gelten würden.

Bei beiden Ausführungsbeispielen kann die stabförmige Temperaturmesseinrichtung an ihrem Objekt-fernen Ende jenseits der Lochblende eine Klemmkappe aufweisen zum Abwinkeln von Kabeln der Messeinrichtung, zum Beispiel um 90 Grad. Dies hat den Vorteil, dass die insgesamt benötigte Bautiefe weiter verkürzt werden kann und somit weiterer Raum für die Federwegverlängerung zur Verfügung steht.

Weiterhin ist es vorteilhaft, wenn der Mantel der stabförmigen Messeinrichtung, beispielsweise im Bereich des Federelementes und/oder der Öffnung der Lochblende verstärkt ist, weil durch die Verstärkung die Gefahr einer unbeabsichtigten Beschädigung oder Biegung der Messeinrichtung oder von deren Kabel im Einwirkungsbereich des Federelementes oder der Lochblende vermieden werden.

Darüber hinaus ist als Vorteil festzuhalten, dass die erfindungsgemäße Hülse auch bei bestehenden Kokillensystemen einfach nachgerüstet werden kann, so dass auch bei diesen bestehenden Systemen die genannten Vorteile realisiert werden können.

Bei der erfindungsgemäßen Positionierungsvorrichtung ist das Federelement innerhalb des zylindrischen Führungselementes und der Hülse gelagert, wobei die Hülse durch den zweiten Anschlag, insbesondere in Form eines Überwurfes abgeschlossen ist. Auf diese Weise ist das Federelement vorteilhafterweise vor der Einwirkung ungünstiger Umgebungsbedingungen, wie Schmutz, Wasserdampf und Verkrustungen durch Gießpulver, insbesondere gegen Korrosion, geschützt. Zum Schutz gegen Korrosion ist es auch vorteilhaft, wenn die Positionierungsvorrichtung bzw. deren Komponenten, insbesondere aber auch das Federelement, aus korrosionsbeständigen Materialien, wie rostfreiem Stahl, Kupfer etc. hergestellt oder mit geeigneten Korrosionsschutzschichten versehen werden.

Der Beschreibung sind insgesamt acht Figuren beigefügt, wobei
- Figur 1: die erfindungsgemäße Positionierungsvorrichtung gemäß einem ersten Ausführungsbeispiel;
- Figur 2: eine erfindungsgemäße Hülse gemäß dem ersten Ausführungsbeispiel;
- Figur 3: eine Lochblende als zweiten Anschlag für ein Federelement gemäß dem ersten Ausführungsbeispiel;
- Figur 4: eine perspektivische Darstellung der Positionierungsvorrichtung gemäß dem ersten Ausführungsbeispiel;
- Figuren 5 a) - c): einen schematischen Querschnitt durch das erfindungsgemäße Positionierungselement gemäß einem zweiten Ausführungsbeispiel in nicht montiertem und montiertem Zustand mit unterschiedlicher Vorspannung;
- Figuren 6 a) - b): einen schematischen Querschnitt durch die erfindungsgemäße Positionierungsvorrichtung gemäß dem zweiten Ausführungsbeispiel mit einer ersten Variante für eine 30 mm Kompensation; und
- Figuren 7 a) - b): einen Querschnitt durch die Positionierungsvorrichtung gemäß dem zweiten Ausführungsbeispiel mit einer zweiten Variante für eine 30 mm Kompensation;
zeigt.

Die Erfindung wird nachfolgend unter Bezugnahme auf die genannten Figuren detailliert beschrieben. In allen Figuren sind gleiche mechanische Elemente mit gleichen Bezugzeichen bezeichnet.

Die beiden nachfolgend vorgestellten Ausführungsbeispiele der vorliegenden Erfindung realisieren beide den Kerngedanken der Erfindung, nämlich eine Verschiebung und Fixierung des zweiten Anschlags für das Federelement über das Kokillen-ferne Ende des zylinderförmigen Führungselementes in Form der Dehnschraube hinaus. Sie unterscheiden sich lediglich in der Ausgestaltung des zweiten Anschlags 132 und der Hülse 130.

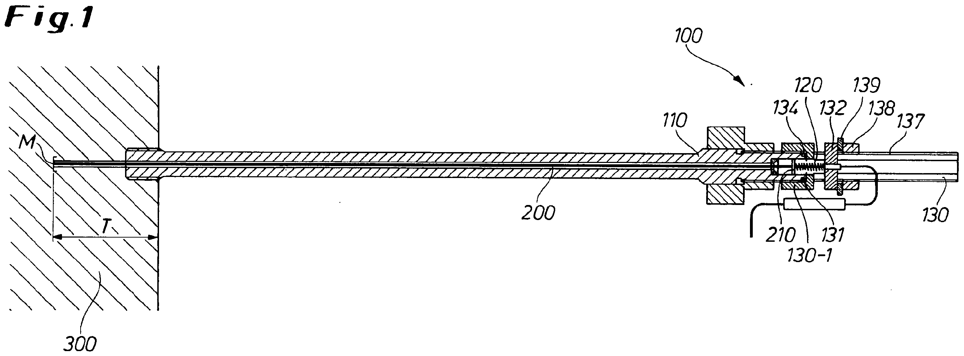

Es wird zunächst das erste Ausführungsbeispiel unter Bezugnahme auf die Figuren 1 bis 4 näher beschrieben.

Figur 1 zeigt einen Querschnitt durch ein Objekt in Form einer Stranggießkokille 300, welche mit ihrer Rückseite über ein zylinderförmiges Führungselement 110 in Form einer Dehnschraube an einen Wasserkasten (nicht gezeigt) angeschraubt ist. Die Dehnschraube 110 besitzt eine Längsbohrung, durch die eine stabförmige Messeinrichtung 200, beispielhaft eine Temperaturmesseinrichtung, weiter beispielhaft in Form eines Thermoelementes, von der Rückseite des Wasserkastens herkommend in eine Bohrung in der Rückseite der Stranggießkokille geführt ist. Das kokillenseitige Ende des Thermoelementes 200 kontaktiert dort einen Messpunkt M. Auf der Rückseite der Stranggießkokille 300 sind typischerweise eine Vielzahl von Messpunkten in unterschiedlichen Tiefen angeordnet. Die Dehnschraube 110 ist nicht nur in der Wand des Wasserkastens, sondern auch in der Rückseite der Kokille fest eingeschraubt und insofern der Kokille räumlich fest zugeordnet. An ihrem Kokillen-fernen Ende ist die Dehnschraube aufgebohrt zur Aufnahme eines ersten mit dem Thermoelement fest verbundenen Anschlags 210 und eines koaxial zu dem Thermoelement geführten Federelementes 120, welches hier beispielhaft als Druckfeder ausgebildet ist und gegen den ersten Anschlag 210 drückt.

Erfindungsgemäß ist eine Hülse 130 lösbar oder dauerhaft fest in axialer Verlängerung an das Kokillen-ferne Ende der Dehnschraube 110 angeschlossen. Bei einer lösbaren Verbindung ist der Kopf 130-1 der Hülse 130 entweder als Klemmelement vorzugsweise als Bajonettverschluss, ausgebildet oder, wie in Figur 1 gezeigt, mit einem Innengewinde versehen. Dann kann die Hülse 130 optional gegen das Kokillen-ferne Ende der Dehnschraube 110 zum Beispiel mit Hilfe einer Ringdichtung 131 abgedichtet sein. Zwecks Realisierung einer dauerhaften Verbindung ist die Hülse z. B. einstückig mit dem zylinderförmigen Führungselement ausgebildet oder mit diesem verschweißt.

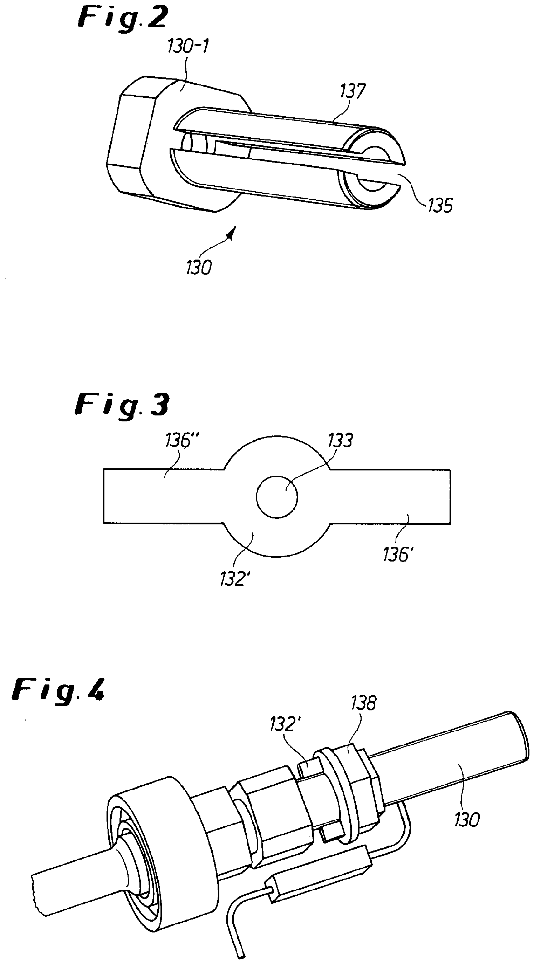

Die erfindungsgemäße Hülse gemäß dem ersten Ausführungsbeispiel ist in Figur 2 gezeigt. Dort ist zu erkennen, dass die Hülse den besagten Kopf 130-1 aufweist, an den sich ein zylinderförmiger Körper anschließt.

Bei dem ersten Ausführungsbeispiel ist der zweite Anschlag 132 als Lochblende 132' mit zwei Nasen 136' und 136" ausgebildet; siehe Figur 3. Die Hülse 130 ist mit einem Schlitz 135 versehen. Die Lochblende 132' ist axial innerhalb der Hülse verschiebbar, wobei die Nasen 136', 136" in dem Schlitz 135 geführt sind. Die Position des zweiten Anschlags in Form der Lochblende 132' ist innerhalb der Hülse beliebig einstellbar. Das Einstellen erfolgt mit Hilfe einer Gewindemutter 138, die mit einem Außengewinde 137 auf der Hülse 130 in Eingriff steht. Die Gewindemutter 138 wirkt idealerweise über eine Unterlegscheibe 139 und die Nasen 136', 136" direkt auf die Lochblende. Bei jedem Einstellvorgang stützt sich das Thermoelement 200 an dem Messpunkt M in der Kokille 300 ab, während es gleichzeitig über das Federelement 120 und den ersten Anschlag 210 an den Messpunkt M gedrückt wird. Durch Drehen der Gewindemutter 138 ist es möglich, eine gewünschte Vorspannung, mit der das Thermoelement gegen den Messpunkt gedrückt werden soll, für verschiedene Bohrlochtiefen T jeweils geeignet einzustellen und auf diese Weise eine sichere Kontaktierung zu gewährleisten.

Figur 4 zeigt die erfindungsgemäße Positionierungsvorrichtung aus Figur 1 in perspektivischer Ansicht.

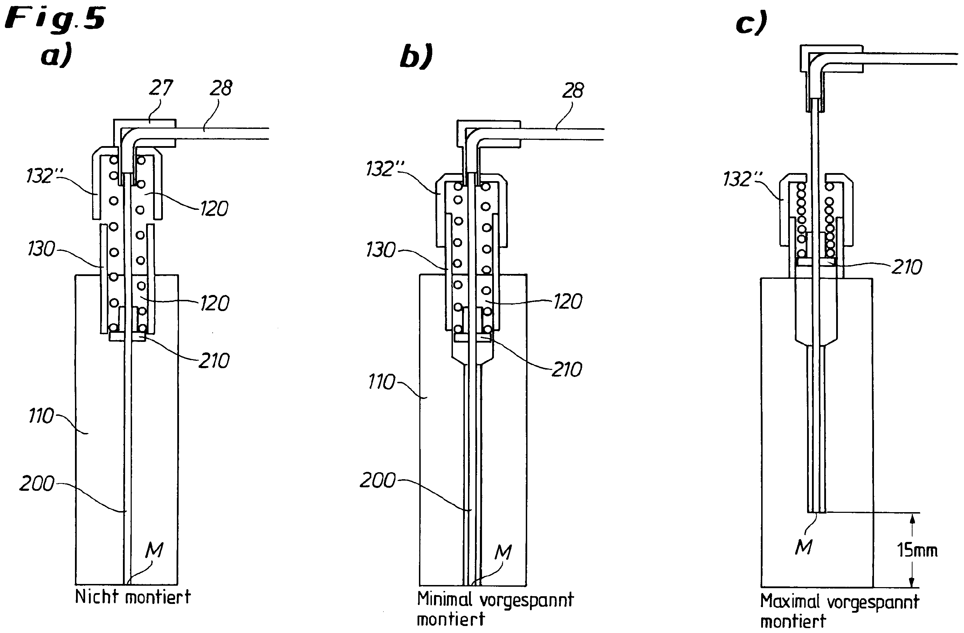

Bei dem zweiten Ausführungsbeispiel ist die Hülse 130, auch als Einschraubnippel bezeichnet, typischerweise nicht geschlitzt, wobei jedoch ein Schlitz unschädlich wäre. Im Unterschied zum ersten Ausführungsbeispiel ist der zweite Anschlag in Form der Lochblende 132" als Überwurf, vorzugsweise als Überwurfmutter ausgebildet, welche auf das Objekt-ferne Ende der Hülse 130 aufschraubbar ist; siehe Figur 5 a), b) und c). Alternativ kann der Überwurf auch mit einem Bajonettanschluß auf dem Objekt-fernen Ende der Hülse 130 befestigt sein. Bei beiden Alternativen ist der lösbare Überwurf vorzugsweise mit einem O-Ring gegen die Hülse abgedichtet.

Figur 5 a) zeigt die erfindungsgemäße Positionierungsvorrichtung gemäß dem zweiten Ausführungsbeispiel mit der Hülse 130 bzw. dem Einschraubnippel eingeschraubt in das Objekt-ferne Ende der Dehnschraube 110; allerdings mit nicht- montiertem Überwurf 132". Das Thermoelement 200 liegt an der Messstelle M im Innern der Kokille an und ragt, ohne vorgespannt zu sein, über die Hülse 130 hinaus. An dem Objekt-fernen Ende der Temperaturmesseinrichtung 200 ist diese durch die Öffnung innerhalb der Überwurfmutter 132" geführt und ihr abgehendes Kabel 28 ist mit Hilfe einer Klemmklappe 27 abgewinkelt. Im Innern der Hülse 130 und der Überwurfmutter 132" ist zwischen dem ersten Anschlag 210, der fest mit der Temperaturmesseinrichtung 200 verbunden ist, und dem zweiten durch die Überwurfmutter gebildeten Anschlag das Federelement 120 angeordnet; in Figur 5 a) jedoch in nicht vorgespanntem Zustand.

Figur 5 b) zeigt im Wesentlichen dieselbe Anordnung wie Figur 5 a), jedoch mit dem Unterschied, dass nun die Überwurfmutter 132" auf die Hülse 130 aufgeschraubt ist. Weil die Überwurfmutter 132", wie gesagt, als zweiter Anschlag für das Federelement 120 fungiert, ist dessen Federweg nun durch das Aufschrauben der Überwurfmutter verkürzt worden, wodurch die Temperaturmesseinrichtung 200 mit einer leichten Vorspannung gegen den Messpunkt M beaufschlagt wird. Diese Vorspannung gewährleistet, dass der Kontakt zwischen dem messpunktseitigen Ende der Temperaturmesseinrichtung und dem Messpunkt jederzeit gegeben ist.

Figur 5 c) zeigt die erfindungsgemäße Positionierungsvorrichtung gemäß dem zweiten Ausführungsbeispiel in demselben montierten Zustand wie in Figur 5 b) jedoch diesmal für eine um 15 mm höher gelegene Messstelle M innerhalb der Kokille. Dies hat bei Verwendung der gleichen Hülse 130 und der gleichen Überwurfmutter 132" den Effekt, dass sich der erste Anschlag 210 zusammen mit dem Thermoelement 200 in Richtung des zweiten Anschlags bewegt, woraus im vorliegenden Fall eine maximale Komprimierung des Federelementes und damit einhergehend eine maximale Vorspannung für das Thermoelement resultiert. Die unterschiedliche Lage der Messstelle M in den beiden Figuren 5b) und 5c) wurde in Figur 5 c) ausschließlich durch eine Verringerung des Federweges kompensiert. Wenn dies, wie in Figur 5 c) gezeigt, dazu führt, dass das Federelement vollständig komprimiert wird, so verliert das Federelement seine Nachgiebigkeit, was in der Regel unerwünscht ist.

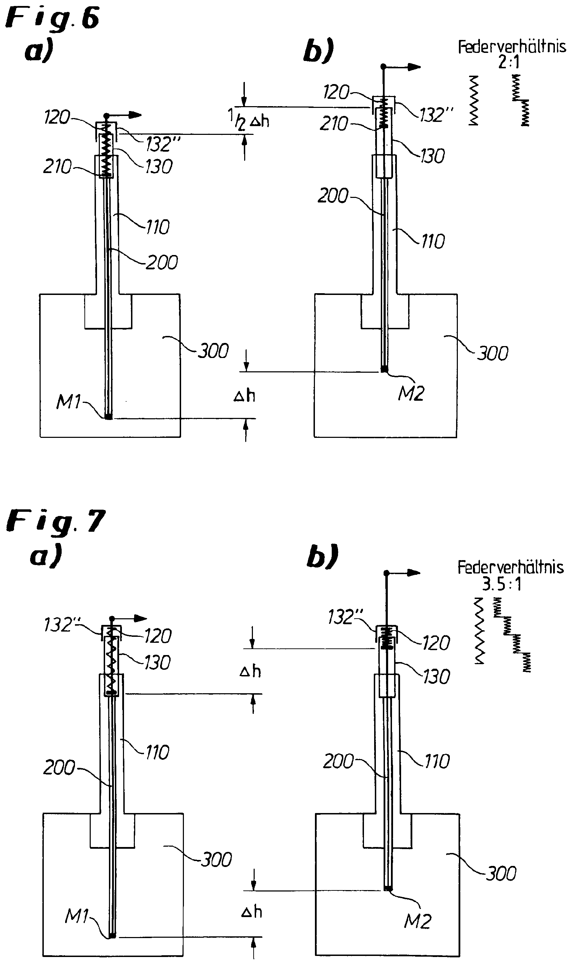

Figur 6 zeigt eine Möglichkeit, um auch bei größeren Höhen-/Tiefenunterschieden zwischen zwei verschiedenen Messstellen innerhalb der Kokille eine vollständige Komprimierung bzw. Blockade des Federelementes zu vermeiden. Dazu ist die Hülse 130 in Figur 6 b) beispielhaft um den halben Höhenunterschied Δ h länger ausgebildet als die Hülse in Figur 6 a). Gleichzeitig ist der Federweg zwischen dem ersten Anschlag 210 und dem zweiten Anschlag in Form der Überwurfmutter 132" in Figur 6 b) gegenüber Figur 6 a) um die Hälfte verkürzt. Die Verkürzung des Federweges führt in Figur 6 b) zu einer Vergrößerung der Vorspannung der Temperaturmesseinrichtung 200 gegen die Messstelle M2, d.h. zu einem veränderten Federverhältnis von 2:1. Jedoch ist das Federelement 120 in Figur 6 b) noch nicht vollständig komprimiert, so dass es im Bedarfsfalle noch nachgiebig reagieren kann.

Figur 7 zeigt eine weitere Variante des zweiten Ausführungsbeispiels. Bei dieser Variante wird die Höhendifferenz Δh zwischen den Messstellen M2 und M1 innerhalb der Kokille, ähnlich wie in Figur 5, alleine durch eine entsprechend große Verkürzung des Federweges zwischen dem ersten Anschlag 210 und dem zweiten Anschlag in Form der Überwurfmutter 132" kompensiert. Die Länge der Hülse 130 sowie die Position der aufgeschraubten Überwurfmutter 132" bleiben in den Figuren 7 a) und 7b) unverändert. Zwischen diesen beiden Figuren stellt sich ein verändertes Federverhältnis von 3,5:1 ein.

Bei beiden Ausführungsbeispielen der Erfindung ist der zweite Anschlag 132 in Form einer scheibenförmigen Lochblende bzw. in Form der Überwurfmutter mit einer zentralen Öffnung 133 ausgebildet. Durch diese zentrale Öffnung ist das Thermoelement 200 oder dessen abgehendes Kabel 28 geführt.

Bei beiden erfindungsgemäßen Ausführungsbeispielen ist es vorteilhaft, wenn der Mantel des Thermoelementes 200 bzw. das Thermoelement selber im Bereich des Federelementes, das als Druckfeder wirkt, verstärkt, vorzugsweise knicksteif, ausgebildet ist, um einen Verschleiß der Isolierung in Form des Mantels und damit eine mögliche Fehlfunktion des Thermoelementes zu vermeiden.

Bei beiden erfindungsgemäßen Ausführungsbeispielen kann das Thermoelement an seinem Kokillen-fernen Ende jenseits des zweiten Anschlags bzw. der Lochblende eine Klemmkappe 27 aufweisen zum Abwinkeln der ablaufenden Kabel 28 des Thermoelementes.

Bei beiden Ausführungsbeispielen sollte die Länge der Hülse so groß gewählt werden, dass sie Federwege in einer Bandbreite von 5 - 60 mm zulässt; diese Bandbreite ist typisch für eine Verwendung der Erfindung im Bereich Stranggießkokillen.

## Patentansprüche

1. Positionierungsvorrichtung (100) für eine stabförmige Messeinrichtung (200) zur Bestimmung einer Messgröße an einem Messpunkt (M) eines Objektes (300), wie z.B. einer Stranggießkokille, mit:
einem zylinderförmigen Führungselement (110), welches dem Objekt (300) räumlich fest zugeordnet ist und in welchem die Messeinrichtung (200) so geführt ist, dass sie den Messpunkt (M) kontaktiert; und
einem Federelement (120) zwischen einem mit der Messeinrichtung (200) verbundenen ersten Anschlag (210) und einem zweiten Anschlag (132) zum Andrücken der Messeinrichtung an den Messpunkt (M);
**dadurch gekennzeichnet,**
**dass** eine Hülse (130) vorgesehen ist, welche in axialer Verlängerung an das Objekt-ferne Ende des zylindrischen Führungselementes (110) angeschlossen ist und in welcher das Federelement (120) und die Messeinrichtung (200) ebenfalls geführt sind; und
**dass** der zweite Anschlag (132) für das Federelement (120) in Verbindung mit der Hülse (130) über das Objekt-ferne Ende des zylindrischen Führungselementes (110) hinaus axial verschiebbar auf der Hülse (130) geführt und fixierbar ist.

2. Positionierungsvorrichtung nach Anspruch 1,
**dadurch gekennzeichnet,**
**dass** die Hülse (130) über ein erstes Gewinde (134) oder einen Bajonettanschluss an dem zylindrischen Führungselement angeschlossen ist oder einstückig mit dem Führungselement ausgebildet ist.

3. Positionierungsvorrichtung (100) nach einem der vorangegangenen Ansprüche,
**dadurch gekennzeichnet,**
**dass** der zweite Anschlag (132) in Form einer scheibenförmigen Lochblende (132') mit einer zentralen Öffnung (133) ausgebildet ist, durch welche die stabförmige Temperaturmesseinrichtung (200) hindurchgeführt ist.

4. Positionierungsvorrichtung (100) nach Anspruch 3,
**dadurch gekennzeichnet,**
**dass** die Hülse (130) mit mindestens einem Schlitz (135) versehen ist; und dass die Lochblende (132) mindestens eine Nase (136) aufweist, welche in dem Schlitz geführt ist.

5. Positionierungsvorrichtung (100) nach Anspruch 4,
**dadurch gekennzeichnet,**
**dass** die geschlitzte Hülse (130) ein zweites Gewinde (137) aufweist; und dass die Lochblende (132) mit Hilfe einer Mutter (138), die mit dem zweiten Gewinde (137) in Eingriff steht und über die Nase (136) auf die Lochblende (132) einwirkt, axial positionierbar ist.

6. Positionierungsvorrichtung (100) nach Anspruch 3,
**dadurch gekennzeichnet,**
**dass** der zweite Anschlag (132) in Form der Lochblende als Überwurf ausgebildet ist, welcher auf dem Objekt-fernen Ende der Hülse befestigbar ist.

7. Positionierungsvorrichtung (100) nach einem der vorangegangenen Ansprüche,
**dadurch gekennzeichnet,**
**dass** es sich bei dem zylindrischen Führungselement (110) um eine zylindrische Dehnschraube handelt, mit welcher das Objekt (300) in Form einer Stranggießkokille an einen Wasserkasten angeschraubt ist.

8. Positionierungsvorrichtung (100) nach einem der vorangegangenen Ansprüche,
**dadurch gekennzeichnet,**
**dass** die stabförmige Messeinrichtung (200) als Thermoelement ausgebildet ist zum Messen der Temperatur als Messgröße an dem Messpunkt.

9. Positionierungsvorrichtung (100) nach einem der vorangegangenen Ansprüche,
**dadurch gekennzeichnet,**
**dass** die stabförmige Messeinrichtung (200) an ihrem Objekt-fernen Ende jenseits des zweiten Anschlags eine Klemmkappe (27) aufweist zum Abwinkeln von ablaufenden Kabeln (28) der Messeinrichtung um z.B. 90°.

10. Positionierungsvorrichtung (100) nach einem der vorangegangenen Ansprüche,
**dadurch gekennzeichnet,**
**dass** der Mantel der stabförmigen Messeinrichtung im Bereich des Federelementes (120) und des zweiten Anschlags verstärkt ist.

11. Positionierungsvorrichtung (100) nach einem der vorangegangenen Ansprüche,
**dadurch gekennzeichnet,**
**dass** das Federelement als Druckfeder ausgebildet ist.

12. Positionierungsvorrichtung (100) nach einem der vorangegangenen Ansprüche,
**dadurch gekennzeichnet,**
**dass** zumindest ein Teil der Komponenten der Positionierungsvorrichtung, insbesondere jedoch auch das Federelement gegen Korrosion geschützt ausgebildet sind.

## Claims

1. Positioning device (100) for rod-shaped measuring equipment (200) for determining a measurement variable at a measuring point (M) of an object (300) such as, for example, a continuous casting mould, comprising:
a cylindrical guide element (110) which is three-dimensionally fixedly associated with the object (300) and in which the measuring equipment (200) is guided so that it contacts the measuring point (M); and
a spring element (120) between a first abutment (210) connected with the measuring device (200) and a second abutment (132) for pressing the measuring equipment against the measuring point (M);
**characterised in that**
a sleeve (130) is provided, which is connected in axial prolongation with the end of the cylindrical guide element (110) remote from the object and in which the spring element (120) and the measuring equipment (200) are similarly guided; and
the second abutment (132) for the spring element (120) in connection with the sleeve (130) is guided on the sleeve (130) to be axially displaceable beyond the object-remote end of the cylindrical guide element (110) and is fixable.

2. Positioning device according to claim 1, **characterised in that** the sleeve (130) is connected with the cylindrical guide element by way of a first thread (134) or a bayonet coupling or is formed integrally with the guide element.

3. Positioning device (100) according to one of the preceding claims, **characterised in that** the second abutment (132) is constructed in the form of a disc-shaped apertured plate (132') with a central opening (133) through which the rod-shaped temperature measuring equipment (200) is guided.

4. Positioning device (100) according to claim 3, **characterised in that** the sleeve (13) is provided with at least one slot (135) and that the apertured plate (132) has at least one lug (136), which is guided in the slot.

5. Positioning device (100) according to claim 4, **characterised in that** the slotted sleeve (130) has a second thread (137) and the apertured plate (132) is axially positionable with the help of a nut (138) which is disposed in engagement with the second thread (137) and acts by way of the lug (136) on the apertured plate (132).

6. Positioning device (100) according to claim 3, **characterised in that** the second abutment (132) in the form of the apertured plate is constructed as a cap nut securable on the object-remote end of the sleeve.

7. Positioning device (100) according to any one of the preceding claims, **characterised in that** the cylindrical guide element (110) is a cylindrical stretch screw by which the object (300) in the form of a continuous casting mould is screw-connected with a water tank.

8. Positioning device (100) according to any one of the preceding claims, **characterised in that** the rod-shaped measuring equipment (200) is constructed as a thermoelement for measuring the temperature as measurement variable at the measuring point.

9. Positioning device (100) according to any one of the preceding claims, **characterised in that** the rod-shaped measuring equipment (200) has at the object-remote end thereof on either side of the second abutment a clamp cap (27) for bending over exiting cables (28) of the measuring equipment through, for example, 90°.

10. Positioning device (100) according to any one of the preceding claims, **characterised in that** the casing of the rod-shaped measuring equipment is reinforced in the region of the spring element (120) and of the second abutment.

11. Positioning device (100) according to any one of the preceding claims, **characterised in that** the spring element is constructed as a compression spring.

12. Positioning device (100) according to any one of the preceding claims, **characterised in that** at least a part of the components of the positioning device, but particularly the spring element, are constructed to be protected against corrosion.

## Revendications

1. Dispositif de positionnement (100) pour un mécanisme de mesure (200) en forme de bâton destiné à déterminer une grandeur de mesure à un point de mesure (M) d'un objet (300) comme par exemple d'une lingotière de coulée continue, comprenant :
un élément de guidage (110) de forme cylindrique qui est attribué en immobilité spatiale à l'objet (300) et dans lequel le mécanisme de mesure (200) est guidé d'une manière telle qu'il entre en contact avec le point de mesure (M) ; et
un élément faisant ressort (120) entre une première butée (210) reliée au mécanisme de mesure (200) et une deuxième butée (132) destinée à comprimer le mécanisme de mesure contre le point de mesure (M) ;
**caractérisé en ce qu'**on prévoit un manchon (130) qui est raccordé en prolongement axial à l'extrémité de l'élément de guidage cylindrique (110), éloignée de l'objet, et dans lequel l'élément faisant ressort (120) et le mécanisme de mesure (200) sont également guidés ; et **en ce que** la deuxième butée (132) pour l'élément faisant ressort (120) est guidée en liaison avec le manchon (130) au-delà de l'extrémité de l'élément de guidage cylindrique (110), éloignée de l'objet, de manière à pouvoir coulisser en direction axiale sur le manchon (130) et de manière à pouvoir y être fixée.

2. Dispositif de positionnement selon la revendication 1, **caractérisé en ce que** le manchon (130) est raccordé via un premier filet de vis (134) ou un raccord à baïonnette à l'élément de guidage cylindrique ou bien est réalisé en une pièce avec l'élément de guidage.

3. Dispositif de positionnement (100) selon l'une quelconque des revendications précédentes, **caractérisé en ce que** la deuxième butée (132) est réalisée sous la forme d'un diaphragme perforé (132') en forme de disque comprenant une ouverture centrale (133) à travers laquelle est guidé le mécanisme de mesure de la température (200) en forme de bâton.

4. Dispositif de positionnement (100) selon la revendication 3, **caractérisé en ce que** le manchon (130) est muni d'au moins une fente (135) et **en ce que** le diaphragme perforé (132) présente au moins un nez (136) qui est guidé dans la fente.

5. Dispositif de positionnement (100) selon la revendication 4, **caractérisé en ce que** le manchon (130) muni d'une fente présente un deuxième filet de vis (137) ; et **en ce que** le diaphragme perforé (132) peut être positionné en direction axiale au moyen d'un écrou (138) qui vient s'engrener avec le deuxième filet de vis (137) et agit via le nez (136) sur le diaphragme perforé (132).

6. Dispositif de positionnement (100) selon la revendication 3, **caractérisé en ce que** la deuxième butée (132) est réalisée sous la forme de diaphragme perforé faisant office de chapeau qui peut être fixé sur l'extrémité du manchon, éloignée de l'objet.

7. Dispositif de positionnement (100) selon l'une quelconque des revendications précédentes, **caractérisé en ce que**, en ce qui concerne l'élément de guidage cylindrique (110), il s'agit d'une vis extensible cylindrique avec laquelle l'objet (300) est vissé sous la forme d'une lingotière de coulée continue à un réservoir d'eau.

8. Dispositif de positionnement (100) selon l'une quelconque des revendications précédentes, **caractérisé en ce que** le mécanisme de mesure (200) en forme de bâton est réalisé sous la forme d'un thermocouple pour la mesure de la température à titre de grandeur de mesure au point de mesure.

9. Dispositif de positionnement (100) selon l'une quelconque des revendications précédentes, **caractérisé en ce que** le mécanisme de mesure (200) en forme de bâton présente à son extrémité éloignée de l'objet, au-delà de la deuxième butée, un capuchon de serrage (27) pour le coudage de câbles descendants (28) du mécanisme de mesure, à raison par exemple de 90°.

10. Dispositif de positionnement (100) selon l'une quelconque des revendications précédentes, **caractérisé en ce que** l'enveloppe du mécanisme de mesure en forme de bâton est renforcée dans la zone de l'élément faisant ressort (120) et de la deuxième butée.

11. Dispositif de positionnement (100) selon l'une quelconque des revendications précédentes, **caractérisé en ce que** l'élément faisant ressort est réalisé sous la forme d'un ressort de pression.

12. Dispositif de positionnement (100) selon l'une quelconque des revendications précédentes, **caractérisé en ce qu'**au moins une partie des composants du dispositif de positionnement, mais en particulier également l'élément faisant ressort, sont réalisés d'une manière telle qu'ils sont protégés contre la corrosion.
